## Europäisches Patentamt
## European Patent Office
## Office européen des brevets

(19)

(11) Publication number: **0 128 537**
**A1**

# EUROPEAN PATENT APPLICATION

(12)

(21) Application number: **84106518.8**

(22) Date of filing: **07.06.84**

(51) Int. Cl.³: **C 08 K 3/22**, C 08 K 3/24, C 08 K 3/32, C 08 K 5/34, C 08 L 27/24

(30) Priority: **10.06.83 US 502915**

(43) Date of publication of application: **19.12.84 Bulletin 84/51**

(84) Designated Contracting States: **CH DE FR GB LI NL**

(71) Applicant: **The B.F. GOODRICH Company, Dept. 0015 WHB-6 500 South Main Street, Akron, Ohio 44318 (US)**

(72) Inventor: **Dickens, Elmer Douglas, Jr., 1160 Maple Drive, Richfield, Ohio 44286 (US)**

(74) Representative: **von Kreisler, Alek, Dipl.-Chem. et al, Deichmannhaus am Hauptbahnhof, D-5000 Köln 1 (DE)**

(54) **Smoke-retarded post-chlorinated polyvinyl chloride compositions.**

(57) Compositions are described which are comprised of post-chlorinated vinyl chloride polymers which contain an intermediate level of chlorine content (i.e., about 60% to 65% by weight of bound chlorine) in combination with one or more smoke retardant additives selected from the group consisting of bismuth phosphate, zinc orthophosphate, zinc tungstate, zinc circonate, zinc molybdate, stannic oxide, melamine molybdate, melamine molybdate with zirconium oxide and melamine molybdate with copper oxalate. A metalsalt of phosphoric acid desirably also is present.

## SMOKE-RETARDED POST-CHLORINATED
## POLYVINYL CHLORIDE COMPOSITIONS

### BACKGROUND OF THE INVENTION

Vinyl chloride polymer products have many applications in the construction and transportation industries. Many uses of vinyl chloride polymer products are for applications where flame resistance and smoke formation are of major significance. Not only is flame resistance important in such applications for obvious reasons, but the generation of smoke by vinyl chloride polymers both in fires and in a smoldering situation requires attention. A number of materials have been proposed and used in polyvinyl chloride homopolymers and in copolymers of vinyl chloride with minor amounts of a copolymerizable monomer to reduce smoke generation when these polymers are exposed to flame, but very few of them have been found to be completely satisfactory. Many such smoke-retardant materials are not compatible or readily mixed with these vinyl chloride polymers, many are colored or form colored products in these vinyl chloride polymers which produce a composition that has an objectionable color for many applications, and many have adverse effects on processing and the physical properties of the compositions formed.

Commercial vinyl chloride homopolymers and copolymers of vinyl chloride with minor amounts of copolymerizable monomers contain up to about 57% by weight of bound chlorine. The chlorine present in the polymers is greatly responsible for the polymers being relatively flame resistant. However, compositions of these polymers exhibit low heat distortion properties that limit the applications of these polymers. It was postulated that if the amount of bound chlorine in the polymer could be increased, the resulting polymer would be even more effective in resisting flame and would have improved resistance to heat distortion. Processes then evolved which produced post-chlorinated vinyl halide polymers with about 67% to 72% by weight of bound chlorine. The post-chlorination of polyvinyl chloride resin (PVC) was accomplished commercially by forming a suspension of finely-divided PVC particles in an aqueous medium, saturating the aqueous medium with chlorine gas (usually at a temperature no greater than about 65°C.) and, then, photo-illuminating the suspension, with agitation, with a constant source of illumination to induce the chlorination reaction between the dissolved chlorine and suspended PVC particles in the suspension. Additional chlorine gas is fed into the suspension to insure that an excess amount of dissolved chlorine gas always is present in the suspension. The chlorination reaction is terminated when the desired degree of chlorination (about 67% to 72% by weight bound chlorine) is achieved by discontinuing the photo-illumination of the suspension. Such a process for chlorinating PVC resin particles is described in U.S. Patent No. 2,996,489 to Dannis and Ramp, the disclosure thereof being incorporated herein by reference. Not only do these post-chlorinated vinyl chloride polymers with bound chlorine content of 67% by weight or greater exhibit improved flame resistance, but they also produce less smoke when exposed to a flame as compared with PVC compositions. This result suggests that less smoke would be generated the higher the chlorine content of the vinyl chloride polymer used in the composition.

Unfortunately, the temperature at which a post-chlorinated vinyl chloride polymer can be processed increases significantly as the chlorine content of the polymer increases. In fact, the processing temperatures required to process commercial post-chlorinated vinyl chloride polymers with chlorine contents of about 67% by weight or greater is sufficiently high (usually exceeding 200°C.) that the polymers are unable to be processed at these high temperatures without undergoing objectionable heat degradation accompanied by severe color change. Efforts to improve the heat stability of the compositions have not been entirely satisfactory. Frequently, heat stabilizers that may be used with PVC compositions are not effective, and may even be detrimental, when used with post-chlorinated vinyl chloride polymers. Thus, one is unable to predict the action of a heat stabilizer in the post-chlorinated polymer merely by observing the stabilizer's effect in a PVC composition or even by observing their effect in post-chlorinated polymers with chlorine contents exceeding about 67% by weight.

## SUMMARY OF THE INVENTION

The present invention provides compositions of post-chlorinated vinyl chloride polymers which contain an intermediate level of chlorine content that can be processed essentially as easily as PVC polymer compositions, but which have smoke generating properties when exposed to flame similar, and in some cases superior, to post-chlorinated vinyl chloride polymers which have relatively high chlorine contents (i.e., 67% by weight or more of bound chlorine). In accordance with the present invention, a post-chlorinated vinyl chloride polymer having from about 60% to 65% by weight, preferably from about 62% to 64% by weight, of bound chlorine is used in combination with one or more smoke retardant additives selected from the group consisting of bismuth phosphate, zincorthophosphate, zinc tungstate, zinc zirconate, zinc molybdate, stannic oxide, melamine molybdate, melamine molybdate with zirconium oxide, melamine, and melamine molybdate with copper oxalate, and preferably with a metal salt of phosphoric acid heat stabilizer. The compositions of the present invention not only exhibit excellent flame resistance and resistance to smoke generation when the composition is exposed to flame, but also have excellent heat distortion properties and are readily processed at temperatures not significantly higher than temperatures at which PVC compositions are processed thereby avoiding the heat degradation concerns of prolonged processing at the higher temperatures needed for processing the post-chlorinated polymers with the relatively high chlorine contents (i.e., a chlorine content of 67% by weight or greater).

The post-chlorinated vinyl chloride polymers which have an intermediate bound chlorine level (i.e., a chlorine content of from about 60% to 65% by weight) can be produced by a process similar to that described above (and in U.S. Patent No. 2,996,489) for producing the higher chlorine content polymers, except that, instead of saturating the aqueous medium with chlorine, a less than chlorine-saturated aqueous medium is used to slow down the rate of chlorination of the PVC particles and/or the time of photo-illumination is decreased so that time during which chlorination of the polymer occurs is reduced. The vinyl chloride polymers which can be post-chlorinated to produce polymers which have an intermediate bound chlorine content preferably are homopolymers of vinyl chloride, although polymers produced by the polymerization of a monomer mixture containing not less than about 70% by weight vinyl chloride, more preferably not less than 90% by weight vinyl chloride, may be used. Thus, copolymers and interpolymers of vinyl chloride with minor amounts of 1-monoolefinic or vinyl type (i.e., containing a single $CH_2=C<$ grouping per molecule) can be used. Illustrative comonomers are vinylidene chloride, vinyl acetate, methyl acrylate, syrene, acrylonitrile, methyl methacrylate, ethylene and propylene. Most preferred as starting materials are suspension or bulk polymerized vinyl chloride polymers whose particles have an inherent viscosity in the range of about 0.50 to about 1.20 (when measured in accordance with ASTM-D1243), a porosity in the range from about 0.05 cc/g to about 0.50 cc/g, and a surface area in the range from about 1.0 $M^2$/g to about 3.0 $M^2$/g.

The amount of smoke-retardant added to the compositions of the present invention can vary, but desirably from about 0.01 to 20 parts by weight of the smoke-retardant (desirably from 1.0 to 10 parts by weight) is used per 100 parts by weight of post-chlorinated vinyl chloride polymer. The smoke retardant can be added to the post-chlorinated vinyl chloride polymer in any convenient manner such as by milling the smoke retardant and polymer together on a roll mill. Desirably, the smoke retardant has an average particle size from about 0.01 to about 800 microns, preferably from about 0.1 to about 100 microns.

The heat stabilizer desirably added to the compositions of the present invention are mixtures of organotin stabilizers with water-soluble alkali metal salts of phosphoric acid. Examples of such salts are the sodium, potassium, lithium and magnesium salts of phosphoric acid, and include disodium hydrogen phosphate, the orthophosphates (such as the mono-, diand tri-orthophosphates of said alkali metals), the alkali metal polyphosphates (such as the -pyrophosphates, tripolyphosphates and -tetrapolyphosphates). Examples of the organotin stabilizers are dibutyltin dilaurate, dibutyltin maleate, di-n-octyltin maleate, dibutyltin bis-(lauryl mercaptide), dibutyltin S,S-bis(isooctyl thioglycolate, dibutyltin ß-mercaptoproprionate, di-n-octyltin S,S-bis(isooctyl thioglycolate, and di-n-octyltin ß-mercaptoproprionate. The amount of phosphate salt used in the compositions of the present invention range from about 0.25 part to about 10.0 parts by weight, preferably from 0.5 part to 4.0 parts by weight, of the phosphate salt per 100 parts by weight of post-chlorinated vinyl chloride polymer. Desirably, from about 0.5 to 5.0 parts by weight of the organotin stabilizer is used per 100 parts by weight of post-chlorinated vinyl chloride polymer. The most preferred salts are the sodium salts of phosphoric acid and especially disodium hydrogen phosphate. The water-soluble alkali metal salt of phosphoric acid can be combined with the smoke retardant and post-chlorinated vinyl chloride polymer in any convenient manner. One convenient way of combining the heat stabilizer with the post-chlorinated vinyl chloride polymer is to dissolve the alkali metal salt of phosphoric acid in water and spray the solution onto the post-chlorinated vinyl chloride polymer and then drying the polymer leaving the alkali metal salt of phosphoric acid coated on the particles of post-chlorinated vinyl chloride polymer.

In addition to the aforesaid smoke retardants and heat stabilizers, other compounding ingredients such as plasticizers, lubricants, colorants, etc. also may be added to the compositions.

The following specific examples further illustrate the present invention. In the examples, all parts are by weight.

Smoke retardancy may be measured using an NBS Smoke Chamber according to procedures described in ASTM E662-79 "Test For Specific Optical Density Of Smoke Generated By Solid Materials." Maximum smoke density (Dm) is a dimensionless number and has the advantage of representing a smoke density independent of chamber volume, specimen size or photometer path length, provided a consistent dimensional system is used. Percent smoke reduction is calculated using the equation:

$$\frac{Dm/g \text{ of control} - Dm/g \text{ of sample}}{Dm/g \text{ of control}} \times 100$$

The term "Dm/g" means maximum smoke density per gram of sample. Dm and other aspects of the physical optics of light transmission through smoke are discussed fully in the ASTM publication.

### EXAMPLE I

The smoke retardant property of a number of smoke retardant additives for PVC compositions is illustrated in this example. The additives were added to the following four recipes:

### Recipe 1

| Material | Parts/Wt. |
| --- | --- |
| Polymer[1] | 100.0 |
| Dibutyltin-bis-isooctyl thioglycolate (stabilizer) | 2.0 |
| Polyethylene powder[2] | 2.0 |
| Additive | Varied |

[1] Polyvinyl chloride polymer, GEON 80x6 manufactured by The BFGoodrich Company 56.7% by weight chlorine

[2] A commercial lubricant, "Microthene 510"

### Recipe 2

| Material | Parts/Wt. |
| --- | --- |
| Polymer[1] | 100.0 |
| Dibutyltin-bis-isooctyl thioglycolate | 2.0 |
| Microthene 510 lubricant | 2.0 |
| Disodium hydrogen phosphate | 2.14 |
| Additive | Varied |

[1] Post-chlorinated vinyl chloride polymer produced by The BFGoodrich Company, 63.5% by weight chlorine.

### Recipe 3

| Material | Parts/Wt. |
| --- | --- |
| Polymer[1] | 100.00 |
| Dibutyltin-bis-isooctyl thioglycolate | 2.0 |
| Microthene 510 lubricant | 2.0 |
| Disodium hydrogen phosphate | 3.11 |
| Additive | Varied |

[1] Post-chlorinated vinyl chloride polymer

produced by The BFGoodrich Company, 67% by weight chlorine.

## Recipe 4

| Material | Parts/Wt. |
|---|---|
| Polymer[1] | 100.0 |
| Dibutyltin-bis-isooctyl thioglycolate | 2.0 |
| Microthene 510 lubricant | 2.0 |
| Additive | Varied |

[1]Post-chlorinated vinyl chloride polymer produced by The BFGoodrich Company, 67% by weight chlorine.

The disodium hydrogen phosphate of Recipes 2 and 3 were sprayed onto the respective polymers and the polymers then were dried. The other ingredients of the respective recipes were dry blended with the polymers and milled on a plastic mill until banded. The mill temperature was varied according to the glass transition temperature of the polymer used. Samples were sheeted off and cut to a 3"x3"x0.030" test size for determination of their smoke generating properties using the flaming mode of the NBS Smoke Chamber Test (ASTM E662-79) described hereinbefore. Test results are given in Table I.

## TABLE I

| Additive | Recipe 1 | | Recipe 2 | |
|---|---|---|---|---|
| | Dm/g | % Reduction | Dm/g | % Reduction |
| Control (zero additive) | 89.8 | --- | 23.0 | ---* |
| 2 Parts Aluminum Phosphate | 83.2 | 6.2 | 24.1 | -4.7 |
| 2 " Aluminum Tungstate | 75.3 | 16.2 | 23.1 | -0.5 |
| 2 " Aluminum Meta-Titanate | 60.6 | 32.5 | 22.4 | 2.6 |
| 3 " Calcium Metaborate | 89.6 | 0.3 | 26.1 | -13.7 |
| 1 " Bismuth Phosphate | 45.6 | 49.3 | 14.1 | 38.6 |
| 2 " Zirconium Oxide | 77.8 | 13.4 | 22.7 | 1.1 |
| 2 " Zinc Orthophosphate | 39.8 | 55.7 | 15.5 | 32.6 |
| 2 " Zinc Tungstate | 44.1 | 50.9 | 17.4 | 24.1 |
| 2 " Melamine Molybdate | 48.1 | 46.4 | 12.2 | 46.9 |
| 2 " Zinc Zirconate | 52.6 | 41.5 | 11.9 | 48.3 |
| 2 " Zinc Molybdate | 45.2 | 49.7 | 12.9 | 43.7 |
| 2 " Stannic Oxide | 68.5 | 23.8 | 14.6 | 36.6 |

TABLE I (CONT)

| | Recipe 1 | | Recipe 2 | |
| Additive | Dm/g. | % Reduction | Dm/g. | % Reduction |
|---|---|---|---|---|
| 1 Part Melamine Molybdate | 71.4 | 20.5 | 18.4 | 20.0 |
| 1 " Melamine Molybdate<br>1 " Aluminum Phosphate | 86.8 | 3.4 | 22.6 | 1.5 |
| 1 " Melamine Molybdate<br>1 " Zirconium Oxide | 88.1 | 1.9 | 15.8 | 31.3 |
| 1 " Melamine Molybdate<br>1 " Zinc-Orthophosphate | 59.4 | 33.9 | 11.9 | 48.3 |
| 1 " Melamine Molybdate<br>1 " Zinc Tungstate | 71.1 | 20.9 | 14.8 | 35.7 |

*Percent reduction based on PVC control is 74.4%

TABLE I (CONT)

| Additive | Recipe 3 | | Recipe 4 | |
|---|---|---|---|---|
| | Dm/g | % Reduction | Dm/g | % Reduction |
| Control (zero additive) | 6.8 | ---* | 6.0 | ---** |
| 2 Parts Aluminum Phosphate | 6.9 | - 1.5 | 6.4 | - 7.4 |
| 2 " Aluminum Tungstate | 6.3 | 7.4 | 5.7 | 4.5 |
| 2 " Aluminum Meta-Titanate | 4.2 | 38.2 | 6.2 | - 3.3 |
| 3 " Calcium Metaborate | 5.8 | 14.7 | 7.1 | -18.7 |
| 1 " Bismuth Phosphate | 4.9 | 27.9 | --- | --- |
| 2 " Zirconium Oxide | 6.6 | 2.9 | 5.2 | 13.9 |
| 2 " Zinc Orthophosphate | 6.9 | - 1.5 | 3.7 | 38.2 |
| 2 " Zinc Tungstate | 5.8 | 14.7 | 5.1 | 15.6 |
| 2 " Melamine Molybdate | 5.4 | 20.6 | 4.1 | 31.0 |
| 2 " Zinc Zirconate | 7.8 | -14.7 | 6.1 | - 1.3 |
| 2 " Zinc Molybdate | 4.4 | 35.3 | 3.2 | 47.1 |
| 2 " Stannic Oxide | 7.7 | -13.2 | 6.7 | -12.2 |

TABLE I (CONT)

| | Recipe 1 | | Recipe 2 | |
|---|---|---|---|---|
| Additive | Dm/g | % Reduction | Dm/g | % Reduction |
| 1 Part Melamine Molybdate | 6.7 | 1.5 | 4.9 | 17.6 |
| 1 " Melamine Molybdate<br>1 " Aluminum Phosphate | 5.7 | 16.2 | 5.3 | 12.0 |
| 1 " Melamine Molybdate<br>1 " Zirconium Oxide | 4.9 | 27.9 | 4.0 | 33.8 |
| 1 " Melamine Molybdate<br>1 " Zinc-Orthophosphate. | 5.0 | 26.5 | 3.4 | 42.6 |
| 1 " Melamine Molybdate<br>1 " Zinc Tungstate | 5.1 | 25.0 | 4.6 | 23.8 |

*Percent reduction based on PVC control is 92.3%.

**Percent reduction based on PVC control is 93.3%.

-14-

## EXAMPLE II

The smoke generating property of a number of compositions using polymers of varying chlorine contents were tested using the flaming mode of the NBS Smoke Chamber Test (ASTM E662-79) described hereinbefore. The following recipe was used:

| Material | Parts by Weight |
|---|---|
| Polymer | 100.0 |
| Dibutyltin-bis-isooctyl thioglycolate | 2.0 |
| Microthene 510 lubricant | 2.0 |
| Additive | 0, 5 or 6 |

Samples were prepared as described in Example I. Test results are given in Table II.

TABLE II

| | Chlorine Content | No additive | 5 parts Melamine Molybdate | 3 parts Melamine Molybdate 3 parts Copper Oxalate |
|---|---|---|---|---|
| | % by Wt. | Dm/g | Dm/g | Dm/g |
| Polymer 1* (103EP) | 56.7 | 65.66 | 19.90 | 6.47 |
| Polymer 2** (7712-76-877) | 60.8 | 30.98 | 7.39 | 6.21 |
| Polymer 3** (7712-76-876) | 61.8 | 21.26 | 6.82 | 5.27 |
| Polymer 4** (7712-76-881) | 62.5 | 25.36 | 5.99 | 5.44 |
| Polymer 5** (7712-76-897) | 63.0 | 20.98 | 5.98 | 5.02 |
| Polymer 6** (605x560) | 66.7 | 8.60 | 8.26 | 7.74 |

*A polyvinyl chloride polymer manufactured by The BFGoodrich Company.

**A post-chlorinated polyvinyl chloride polymer manufactured by The BFGoodrich Company.

The compositions of the present invention are useful wherever smoke resistance and flame resistance is desirable, such as in carpets, house siding, plastic components for airplane and passenger car interiors, and the like. The compositions, without colorant added, are white to light cream in color which allows the compositions to be produced in a wide range of colors.

## CLAIMS

1. A composition comprising a post-chlorinated vinyl chloride polymer having from 60% to 65% by weight bound chlorine and from about 0.01 to 20 parts by weight per 100 parts by weight of said polymer of one or more smoke retardants selected from the group consisting of bismuth phosphate, zinc orthophosphate, zinc tungstate, zinc zirconate, zinc molybdate, stannic oxide, melamine molybdate, melamine molybdate with zirconium oxide, and melamine molybdate with copper oxalate.

2. The composition of claim 1 wherein said post-chlorinated vinyl chloride polymer has a chlorine content of from 62% to 64% by weight of bound chlorine.

3. The composition of claim 1 wherein said composition contains from 0.5 to 5.0 parts by weight of an organotin vinyl chloride polymer stabilizer and from 0.25 to 10.0 parts by weight of a water-soluble alkali metal salt of phosphoric acid.

4. The composition of claim 1 wherein said post-chlorinated vinyl chloride polymer has a chlorine content of from 62% to 64% by weight of bound chlorine and wherein said composition contains from 0.5 to 5.0 parts by weight of an organotin vinyl chloride polymer stabilizer and from 0.25 to 10.0 parts by weight of a water-soluble alkali metal salt of phosphoric acid.

5. The composition of claim 1 wherein said post-chlorinated vinyl chloride polymer is a post-chlorinated homopolymer of vinyl chloride.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-4 053 453 (A. McROWE et al.) <br> * Claims 1,7; column 4, lines 55-56 * | 1 | C 08 K 3/22 <br> C 08 K 3/24 <br> C 08 K 3/32 <br> C 08 K 5/34 <br> C 08 L 27/24 |
| Y | US-A-4 153 792 (W. KROENKE) <br> * Claim 2; column 3, lines 32-35 * | 1 | |
| Y | US-A-3 975 359 (E. DICKENS) <br> * Claim 18 * | 1 | |
| Y | US-A-3 901 850 (D. KURTZ) <br> * Claim 1 * | 1 | |
| Y | US-A-3 900 441 (I. KING) <br> * Claim 5 * | 1 | **TECHNICAL FIELDS SEARCHED (Int. Cl. ³)** |
| Y | US-A-4 055 537 (W. KROENKE) <br> * Table 3, example 50; column 11, lines 38-39 * | 1 | C 08 K <br> C 08 L |

The present search report has been drawn up for all claims

| Place of search | Date of completion of the search | Examiner |
|---|---|---|
| THE HAGUE | 12-09-1984 | HOFFMANN K.W. |